# EUROPÄISCHE PATENTSCHRIFT

(11) **EP 2 829 476 B1**
(45) Veröffentlichungstag und Bekanntmachung des Hinweises auf die Patenterteilung: **30.08.2017**
(21) Anmeldenummer: 14002532.1
(22) Anmeldetag: 22.07.2014
(51) Int. Cl.: B64G 1/40, F02K 9/44, F16K 31/02, F16K 11/048

(54) **Vorrichtung zum Öffnen oder Schließen eines Dichtsitzes eines Ventils**
Device for opening or closing a sealing seat of a valve
Dispositif d'ouverture ou de fermeture du siège d'étanchéité d'une soupape

(30) Priorität: 25.07.2013 DE 102013012377
(43) Veröffentlichungstag der Anmeldung: 28.01.2015
(73) Patentinhaber: Airbus DS GmbH, 82024 Taufkirchen (DE)
(72) Erfinder: Kraus, Stephan, D-74229 Oedheim (DE); Maier, Thomas, D-74348 Lauffen (DE); Wolf, Markus, D-68163 Mannheim (DE)
(74) Vertreter: Schicker, Silvia

(56) Entgegenhaltungen:
- EP-A1- 2 743 552
- DE-A1-102008 063 534
- JP-A- 2013 079 660

## Beschreibung

Die Erfindung betrifft eine Vorrichtung zum Öffnen oder Schließen eines Dichtsitzes eines Ventils, das zur Anordnung in einer Rohrleitung für flüssige oder gasförmige Medien vorgesehen ist.

Ventile kommen dort zum Einsatz, wo beispielsweise eine Rohrleitung für flüssige oder gasförmige Medien geöffnet oder geschlossen werden muss. Im geschlossenen Zustand des Ventils muss durch dieses eine sehr geringe Leckrate sicher gestellt sein. Je nach Anwendung können die Ventile zur mehrfachen oder auch nur zur einmaligen Betätigung vorgesehen sein, wobei letzteres z.B. in Antriebssystemen für Raumfahranwendungen der Fall ist.

In technischen Systemen wird zwischen Normally Open (NO) und Normally Closed (NC) unterschieden. Die Bezeichnung bezieht sich auf den Schaltzustand vor der Betätigung. Zum Beispiel wird ein NO Ventil beim Betätigen geschlossen.

An die Zuverlässigkeit der Ansteuerung werden bei Raumfahrtanwendungen hohe Anforderungen gestellt, da eine Fehlfunktion einen großen Schaden oder sogar den Verlust des Antriebssystems verursachen kann.

Die DE 10 2008 063 534 A1 offenbart eine Anordnung zum Verstellen eines Ventils, das ein unter Wirkung eines Rückstellelementes stehendes Ventilschließglied aufweist, Die Anordnung umfasst ein an dem Ventil anbringbares Gehäuse, in welchem zumindest ein temperaturabhängiges, mit einer Stelleinrichtung zusammenwirkendes Stellelement angeordnet ist, durch welches die Stelleinrichtung in Achslängsrichtung des Ventilschließgliedes zwischen einer Ruheposition und einer Arbeitsposition bewegbar angesteuert ist. Das Stellelement ist als Federelement aus einer Formgedächtnislegierung ausgebildet.

Die JP 2013-079660 A offenbart ein thermisches Ventil, dessen Öffnungs- und Schließmechanismus ein Federelement aus einer Formgedächtnislegierung umfasst.

Die EP 2 743 552 A1 zeigt ein Ventil mit einem Gehäuse mit einem Fluideinlass und einem Fluidauslass. Der Fluideinlass steht mit dem Fluidauslass über eine Strömungskammer im Inneren des Gehäuses in Fluidkommunikation. Der Fluiddurchsatz ist durch die Strömungskammer durch einen im Inneren des Gehäuses beweglich gelagerten Kolben beeinflussbar, wobei an einer ersten Angriffsfläche des Kolbens ein entlang seiner Hauptbewegungsrichtung wirkendes erstes Stellglied angreift und an einer zweiten Angriffsfläche des Kolbens ein entlang der Hauptbewegungsrichtung wirkendes zweites Stellglied angreift. Die Wirkrichtung des ersten Stellgliedes und die Wirkrichtung des zweiten Stellgliedes sind entgegengesetzt und das erste Stellglied ist aus einer Form-Gedächtnis-Legierung gebildet. Das Gehäuse weist ein erstes Heizelement auf, welches im Bereich des ersten Stellgliedes im und/oder am Gehäuse angeordnet ist und das erste Stellglied ist durch das Heizelement erwärmbar.

Es ist Aufgabe der vorliegenden Erfindung eine baulich und/oder funktional zuverlässige Vorrichtung zum Öffnen oder Schließen einer Fluidleitung sowie ein entsprechendes Antriebssystem für Raumfahrtanwendungen anzugeben, welche, bei einem NC-Ventil, eine geringe Leckrate vor der Aktuierung oder, bei einem NO-Ventil, eine geringe Leckrate nach der Aktuierung sicherstellen.

Diese Aufgabe wird gelöst durch eine Vorrichtung gemäß den Merkmalen des Anspruchs 1 sowie ein Antriebssystem gemäß den Merkmalen des Anspruchs 11. Vorteilhafte Ausgestaltungen ergeben sich aus den abhängigen Ansprüchen.

Bei einer Vorrichtung zum Öffnen oder Schließen eines Dichtsitzes eines Ventils, das zur Anordnung in einer Rohrleitung für flüssige oder gasförmige Medien vorgesehen ist, ist erfindungsgemäß zur einmaligen Ansteuerung des Ventils ein Formgedächtnisaktor vorgesehen, der beim Erreichen einer von dessen Legierungszusammensetzung abhängigen Umwandlungstemperatur seine äußere Form ändert. Die Umwandlungstemperatur ist durch eine steuerbare elektrische Heizvorrichtung der Vorrichtung erzeugbar. Erfindungsgemäß ist der Formgedächtnisaktor derart ausgebildet, dass er seine äußere Form sprunghaft und irreversibel ändert und ist der Dichtsitz durch eine metallische Dichtung aus einem duktilen Material gebildet, welche im Dichtfall gegen ein Gegenstück gepresst wird und dabei plastisch verformbar ist.

Die Verwendung eines Formgedächtnisaktors ermöglicht die einmalige und irreversible Ansteuerung des Ventils. Die Ansteuerung erfolgt, indem der Formgedächtnisaktor durch die von außen, d.h. die Heizvorrichtung, zugeführte Energie erwärmt wird, wodurch dieser sprunghaft seine Größe verändert und dadurch den derzeitigen Öffnungs- oder Schließzustand des Ventils irreversibel verändert. Diese Betätigungsfunktion ist mit hoher Zuverlässigkeit bereitstellbar. Zur Betätigung des Ventils sind neben dem Formgedächtnisaktor und der Heizvorrichtung keine weiteren Elemente erforderlich, wodurch die Vorrichtung einen einfachen mechanischen Aufbau aufweist. Die Vorrichtung lässt sich mit wenigen Komponenten herstellen. Die Vorrichtung lässt sich mit geringem Gewicht bereitstellen.

Das Ventil kann einen in einem Verteilerraum angeordneten Kolben umfassen, der abhängig davon, ob das Ventil ohne Ansteuerung des Formgedächtnisaktors geöffnet (NO) oder geschlossen (NC) ist, durch eine Feder gegen den Dichtsitz gepresst ist oder nicht, wobei der Formgedächtnisaktor eine zu der Feder entgegen gerichtete Kraft auf den Kolben erzeugt.

Der Kolben kann durch die Ansteuerung des Formgedächtnisaktors abhängig davon, ob das Ventil ohne Ansteuerung des Formgedächtnisaktors geöffnet oder geschlossen ist, von dem Dichtsitz gelöst werden oder an den Dichtsitz gepresst werden. Durch das Ansteuern des Formgedächtnisaktors wird damit der Kolben bewegt. Hierzu wird durch den Formgedächtnisaktor beim Erreichen der Umwandlungstemperatur eine Kraft erzeugt, die größer als die von der Feder erzeugte Kraft ist, um den Kolben zu bewegen.

Die Kraft des Formgedächtnisaktors, d.h. die von dem Formgedächtnisaktor auf den Kolben aufgebrachte Kraft, entspricht im nicht angesteuerten Zustand der von der Feder erzeugten Kraft. Mit anderen Worten, es liegt ein Kräftegleichgewicht vor, wodurch das Ventil - entsprechend der konstruktiven Ausgestaltung - sich entweder in dem Zustand NO (normally open) oder NC (normally closed) befindet. Im nicht angesteuerten Zustand weist der Formgedächtnisaktor seine sog. "kalte" Gefügestruktur auf.

Die Bewegung des Kolbens ist nur vom Kräftegleichgewicht der Feder und des Formgedächtnisaktors abhängig. Dies kann beispielsweise dadurch erreicht werden, dass die Feder und der Formgedächtnisaktor, z.B. in einer gemeinsamen Achse liegend, an gegenüberliegenden Seiten des Kolbens angeordnet sind.

Der Formgedächtnisaktor kann eine Spiralform aufweisen und die Heizvorrichtung kann im Inneren des spiralförmigen Formgedächtnisaktors angeordnet sein. Hierdurch wird eine schnelle Erwärmung des Materials des Formgedächtnisaktors im Falle der aktivierten Heizvorrichtung ermöglicht. Es wird eine gleichförmige Erwärmung des Materials der Formgedächtnislegierung bis zum Erreichen der Umwandlungstemperatur erzielt. Aus Redundanzgründen kann die Heizvorrichtung auch durch mehrere Heizelemente realisiert werden.

Der Verteilerraum kann mit zumindest zwei Anschlüssen gekoppelt sein, so dass durch einen Anschluss das flüssige oder gasförmige Medium in den Verteilerraum und durch einen anderen Anschluss das flüssige oder gasförmige Medium aus dem Verteilerraum strömen kann, wenn das Ventil geöffnet ist.

Die Heizvorrichtung kann eine Sicherung umfassen, welche die Heizvorrichtung nach dem Überschreiten der Umwandlungstemperatur des Formgedächtnisaktors deaktiviert. Hierdurch können nach der Betätigung des Ventils Schäden durch die Heizvorrichtung aufgrund zu hoher Temperaturen verhindert werden. Das Abschalten der Heizvorrichtung ist auch dann sichergestellt, wenn eine Ansteuerung für ein Schaltelement oder das Schaltelement für den Heizkreis selbst defekt sind.

Das Ventil ist rotationssymmetrisch bezüglich der für die Dichtfunktion erforderlichen Komponenten aufgebaut. Hierdurch ergibt sich ein einfacher und Platz sparender Aufbau der Vorrichtung.

Das Ventil kann drei Anschlüsse und zwei Dichtsitze umfassen, wobei einer der Anschlüsse durch eine Blindkappe verschlossen ist. Hierdurch kann, abhängig davon, welcher Anschluss mit der Blindkappe verschlossen ist, wahlweise eine NO (normally open)- oder NC (normally closed)-Funktion realisiert werden. Eine solche Vorrichtung ist flexibel einsetzbar, da zum Zeitpunkt ihrer Herstellung deren Funktion (NO oder NC) noch nicht festzustehen braucht.

Zusammenfassend wird vorgeschlagen, ein Ventil mit einem Einwegeffekt-Formgedächtnisaktor anzusteuern. Der Formgedächtnisaktor in geeigneter Gestalt verändert seine äußere Form sprunghaft beim Erreichen einer von der Legierungszusammensetzung abhängigen Umwandlungstemperatur. Die hierbei freiwerdenden großen Kräfte werden für das Öffnen und Schließen eines metallischen Dichtsitzes verwendet. Die Umwandlungstemperatur wird mittels einer elektrischen Heizvorrichtung erreicht. Das Ventil kann bauartbedingt genau einmal betätigt werden und ähnelt in seinem Einsatzgebiet einem pyrotechnischen Ventil.

Es wird ferner ein Antriebssystem für eine Raumfahrtanwendung vorgeschlagen, das zumindest eine Vorrichtung der oben beschriebenen Art aufweist. Das Antriebsystem weist die gleichen Vorteile auf, wie diese in Verbindung mit der oben beschriebenen Vorrichtung genannt wurden.

Die Erfindung wird nachfolgend näher anhand eines Ausführungsbeispiels in der Zeichnung beschrieben.

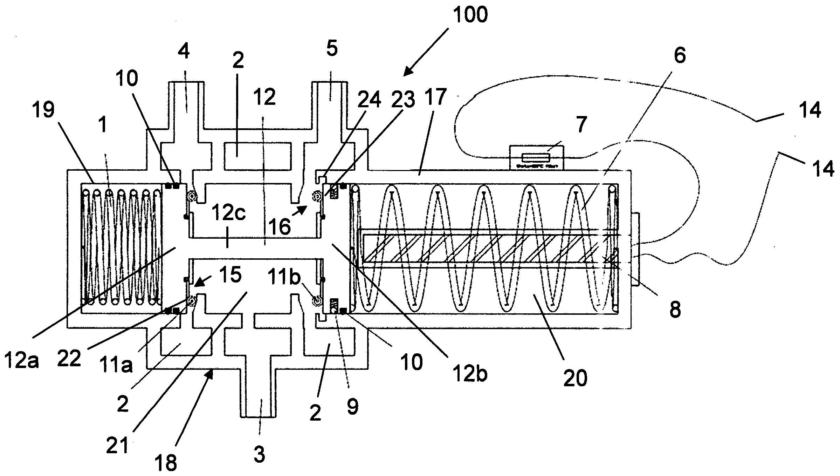

Figur 1 zeigt eine erfindungsgemäße Vorrichtung mit einem Ventil 100, dessen "Schaltzustand" von einem Formgedächtnisaktor 6 einmalig veränderbar ist.

Das Ventil kann z.B. in Antriebssystemen für Raumfahrtanwendungen zum Einsatz kommen, z.B. um bei Satelliten und Raumsonden einen oder mehrere Tanks mit Bedrückungsgas von Treibstofftanks zu separieren. Das Ventil 100 muss hierzu in einem nicht aktuierten (angesteuertem) Zustand geschlossen sein. Dieser Zustand wird als "normally closed" (NC) bezeichnet. Das Ventil kann auch dazu eingesetzt werden, eine Treibstoffzufuhr zu einem Triebwerk zu trennen, wenn dieses nicht mehr benötigt wird. Das Ventil muss bei dieser Anwendung im nicht aktuierten Zustand offen sein. Dieser Zustand wird als "normally open" (NO) bezeichnet. Das in Fig. 1 gezeigte Beispiel besitzt sowohl die NO (normally open) als auch die NC (normally closed) Funktionalität. Grundsätzlich kann die Erfindung auch mit einem solchen Ventil 100 verwirklicht werden, welche bauartbedingt nur die eine oder die andere Funktionalität zulässt.

Die in Fig. 1 gezeigte Vorrichtung besteht grundsätzlich aus zwei Unterbaugruppen, nämlich dem Ventil 100 mit zwei metallischen Dichtsitzen 15, 16 und einer Heizvorrichtung 8. Das Ventil 100 weist ein rotationssymmetrisch um eine Mittelachse ausgebildetes Gehäuse 17 auf. Das Gehäuse 17 weist in einem in Bezug auf die Längserstreckung der Mittelachse angeordneten Zentralabschnitt 18 einen vergrößerten Durchmesser auf. In diesem Bereich sind Verteilerräume 2 angeordnet, die sich um die zylindrische Wandung des Gehäuses 17 erstrecken. Die in Fig. 1 gezeigte Vorrichtung kann als "normally open" (NO), d.h. unbetätigt bzw. nicht angesteuert geöffnet, oder "normally closed" (NC), d.h. unbetätigt bzw. nicht angesteuert geschlossen, verwendet werden.

Die Entscheidung, in welcher Konfiguration (NO oder NC) die Vorrichtung verwendet wird, kann dabei nach deren Herstellung getroffen werden und erfolgt durch entsprechende "Verschaltung" von im Ausführungsbeispiel vorgesehenen drei Anschlüssen 3, 4 und 5. Jeder der Anschlüsse 3, 4, 5 ist in dem Zentralabschnitt 18 als sich in Bezug auf die Mittelachse radial erstreckender Stutzen ausgebildet. Die Anschlüsse 3, 4, 5 sind mit jeweils zugeordneten Verteilerräumen 2 strömungstechnisch verbunden. Zwei der drei Anschlüsse 3, 4, 5 werden mit einer jeweiligen Rohrleitung (nicht dargestellt) verbunden.

Soll die Vorrichtung als "normally closed" (NC) konfiguriert werden, so stellt beispielsweise der Anschluss 3 den Ausgang dar und ist mit einer entsprechenden Ausgangs-Rohrleitung zu verbinden. Der Anschluss 4 stellt den Eingang dar und ist mit einer entsprechenden Eingangs-Rohrleitung zu verbinden. Der Anschluss 5 wird mit einer Blindkappe (nicht dargestellt) verbunden.

Soll die Vorrichtung als "normally open" (NO) konfiguriert werden, so stellt beispielsweise der Anschluss 5 den Eingang dar und ist mit einer entsprechenden Eingangs-Rohrleitung zu verbinden. Der Anschluss 3 stellt den Ausgang dar und ist mit einer entsprechenden Ausgangs-Rohrleitung zu verbinden. Der Anschluss 4 wird mit einer Blindkappe (nicht dargestellt) verbunden.

Im Inneren des Gehäuses 17 ist im Bereich des Zentralabschnitts 18 ein in Richtung der Mittelachse des Ventils 100 bewegbarer Kolben 12 angeordnet. Der Kolben 12 besteht aus zwei parallel angeordneten Kolbenplatten 12a, 12b, die über eine Stange 12c, die sich in Richtung der Mittelachse des Gehäuses 17 erstreckt, starr miteinander verbunden sind. Hierdurch ist zwischen den Kolbenplatten 12a, 12b ein Volumen 21 gebildet, durch das das Medium strömen kann, wenn das Ventil 100 geöffnet ist. Jede der Kolbenplatten 12a, 12b weist einen Kolbenboden auf, die einander zugewandt sind und, wenn das Ventil 100 geöffnet ist, mit dem gasförmigen oder flüssigen Fluid in Kontakt steht. Das zwischen den Kolbenböden vorhandene Volumen 21 ist abhängig von der Länge der Stange 12c sowie der Fläche der Kolbenplatten 12a, 12b bzw. der Kolbenböden. An den Seitenflächen der Kolbenplatten 12a, 12b, die an das Gehäuse 17 grenzen, ist jeweils zumindest eine Schaftdichtung 10 vorgesehen, die die jeweilige Kolbenplatte 12a, 12b vollständig umläuft und das Volumen gegenüber nachfolgend beschriebenen Federräumen 19, 20 abdichtet.

Zwischen dem Kolben 12a (d.h. dem von dem Volumen 21 abgewandten Kolbenboden) und dem Gehäuse 17 ist ein erster Federraum 19 gebildet, in dem eine Feder 1 angeordnet ist. In entsprechender Weise ist zwischen dem Kolben 12b (d.h. dem von dem Volumen 21 abgewandten Kolbenboden) und dem Gehäuse 17 ist ein zweiter Federraum 20 gebildet, in dem ein Formgedächtnisaktor 6 angeordnet ist. Der Kolben 12 ist somit in dem Gehäuse 17 zwischen den Federräumen 19, 20 angeordnet. Die Feder 1 ist derart in dem ersten Federraum 19 angeordnet, dass sie eine in Richtung der Mittelachse wirkende Kraft erzeugt, die auf den Kolben 12 wirkt und dabei versucht, das Volumen des Federraums 19 zu vergrößern. Mit anderen Worten übt die Feder 1 eine in Richtung des zweiten Federraums 20 wirkende Kraft auf den Kolben 12 aus. Die Feder 1 kann z.B. eine Schraubenfeder sein. Der Formgedächtnisaktor 6 übt, wenn er eine kalte Gefügestruktur aufweist (d.h. nicht "angesteuert" ist) eine zu der Federkraft der Feder 1 wirkende Gegenkraft aus. Die Feder 1 und der Formgedächtnisaktor 6 stehen im unbetätigten Fall, wenn der Formgedächtnisaktor seine kalte Gefügestruktur aufweist, im Kräftegleichgewicht und der Ventilkolben nimmt die in Fig. 1 dargestellte Position ein.

In dieser Position ist die Kolbenplatte 12a durch die Federkraft der Feder 1 gegen den Dichtsitz 15 gepresst. Der Dichtsitz 15 ist durch eine metallische Dichtung 11a, die auf der plastischen Deformation eines duktilen Metalls gegenüber einem harten Gegenstück beruht, und einen Anschlag 22, gegen den die Dichtung 11a, gepresst ist, gebildet. Das duktile Material der metallischen Dichtung 11a ist als ringförmiger Wulst auf der Kolbenplatte 12a angeordnet und wird durch die Federkraft der Feder 1 gegen den, der Kolbenplatte 12a zugeordneten, Anschlag 22 gepresst, welcher durch einen in das Volumen 21 ragenden ringförmigen Vorsprung gebildet ist. Hierdurch ist der mit dem Anschluss 4 verbundene Verteilerraum 2 von dem Volumen 21 getrennt.

Ein weiterer Dichtsitz 16 ist durch eine metallische Dichtung 11b und einen Anschlag 23 gebildet. Die metallische Dichtung 11b ist als ringförmiger Wulst auf der Kolbenplatte 12b angeordnet. Der Anschlag 23 ist der Kolbenplatte 12b zugeordnet und durch einen in das Volumen 21 ragenden ringförmigen Vorsprung gebildet. Wenn der Dichtsitz 15 in der in Fig.1 dargestellten dichtenden Position ist, ist der Dichtsitz 16 geöffnet, so dass der mit dem Anschluss 5 verbundene Verteilerraum 2 mit dem Volumen 21 strömungstechnisch verbunden ist. Die metallischen Dichtungen 11a, 11b ermöglichen eine geringe Leckage, basierend auf der plastischen Deformation des duktilen Metalls gegenüber dem harten Gegenstück, d.h. dem Anschlag 22, 23.

Die Bewegung des Kolbens 12 ist nur vom Kräftegleichgewicht der Feder1 und des Formgedächtnisaktors 6 abhängig, nicht jedoch vom Innendruck im Inneren des Ventils 100. Wird nun an Kabelenden 14 der elektrischen Heizvorrichtung 8 eine geeignete elektrische Spannung angelegt, steigt die Temperatur des Formgedächtnisaktors 6 bis zur sog. Sprungtemperatur (auch als Umwandlungstemperatur bezeichnet) und der Formgedächtnisaktor 6 übt eine Kraft auf den Kolben 12 aus. Die von dem Formgedächtnisaktor 6 beim Erreichen der Sprungtemperatur erzeugte Kraft ist größer als die von der Feder 1 auf den Kolben 12 aufgebrachte Kraft. Durch diese Kraft wird der Kolben 12 nach links geschoben bis der Dichtsitz 16 das Volumen 21 gegenüber dem mit dem Anschluss 2 verbundenen Verteilerraum 2 abdichtet. Gleichzeitig ist der Dichtsitz 15 in einer nicht mehr dichtenden Stellung. Die Umwandlungstemperatur ist alleine von der Legierungszusammensetzung des Formgedächtnisaktors 6 abhängig.

Ein Einrastmechanismus 9, der z.B. federbelastet ausgeführt sein kann, stellt sicher, dass jede weitere Bewegung des Kolbens 12 unmöglich ist. Der Einrastmechanismus verfügt hierzu beispielsweise über federbelastete Zapfen, die im Bereich der Seitenfläche der Kolbenplatte 12b eingelassen sind, und in korrespondierende Nuten 24 des Gehäuses 17 verfahren werden, sobald der Dichtsitz 16 erreicht ist. In diesem Zustand ist eine plastische Deformation der Dichtung 11b erreicht.

Beim Überschreiten der Umwandlungstemperatur trennt eine Thermosicherung 7 den Stromkreis, so dass der Formgedächtnisaktor 6 nicht länger durch die Heizvorrichtung 8 erwärmt wird.

In einer nicht dargestellten Ausgestaltung kann das Ventil über lediglich zwei Anschlüsse und zugeordnete Verteilerräume verfügen. In dieser Ausgestaltung ist dann auch ein einziger Dichtsitz ausreichend. Ein solches Ventil kann als NO (normally open)- oder NC (normally closed)-Ventil bereit gestellt werden.

Die oben beschriebene Vorrichtung weist eine Reihe von Vorteilen auf und hebt sich insbesondere von derzeit im Einsatz befindlichen pyrotechnisch aktuierten Ventilen durch folgende Vorteile ab:
- Die vorgeschlagene Vorrichtung lässt sich leichter für andere Massenströme und Rohrquerschnitte dimensionieren.
- Bei der Betätigung des Ventils entstehen geringe Mengen an erzeugten Partikeln.
- Die Lebensdauer von Formgedächtnisaktoren ist im Gegensatz zu pyrotechnischen Zündern nicht beschränkt.
- Das Ventil öffnet langsam im Vergleich zu Pyroventilen mit sehr kleinen resultierenden Wasserschlägen ("hydraulic shocks").
- Wird das Ventil in einem Antriebssystem, insbesondere einem Raumfahrtantriebssystem eingesetzt, bringt das Ventil keine oder geringere Schocklasten auf die Struktur des Antriebssystems bei dessen Betätigung auf als dies bei herkömmlichen pyrotechnisch aktuierten Ventilen der Fall ist.
- Das Ventil stellt kein Gefahrgut im Sinne des Sprengstoffgesetzes dar. Somit ist keine spezielle Ausbildung (Sprengstoffbefähigungsnachweis) bei dessen Handhabung nötig.
- Die elektrische Ansteuerung erlaubt eine einfachere Ansteuerung im Vergleich zu pyrotechnischen Ventilen.
- Es bestehen reduzierte Anforderungen bei der Lagerung der Komponenten, z.B. in Bezug auf einen Temperaturbereich.

Das Ventil kann somit durch seine bauartbedingten Vorteile im Gegensatz zu den heute sich im Einsatz befindlichen Ventilen in Raumfahrtanwendungen zu erheblichem Mehrwert in einem Antriebsystems führen, insbesondere in Missionsphasen, die derzeit außerhalb des Nutzungszeitraums pyrotechnischer Ventile liegt, z.B. bei wissenschaftlichen Missionen oder End of Life.

### BEZUGSZEICHENLISTE

- 1: Feder
- 2: Verteilerraum
- 3: Eingang / Ausgang
- 4: Eingang / Ausgang
- 5: Eingang / Ausgang
- 6: Formgedächtnisaktor
- 7: (Thermo)sicherung
- 8: Heizvorrichtung
- 9: Einrastmechanismus
- 10: Schaftdichtung
- 11a: Dichtung
- 11b: Dichtung
- 12: Kolben
- 12a: Kolbenplatte
- 12b: Kolbenplatte
- 12c: (Kolben)Stange
- 13: Dichtoberfläche
- 14: Kabelende
- 15: erster Dichtsitz
- 16: zweiter Dichtsitz
- 17: Gehäuse
- 18: Zentralabschnitt
- 19: Federraum für Feder 1
- 20: Federraum für Formgedächtnisaktor 6
- 21: Volumen
- 22: Anschlag
- 23: Anschlag
- 24: Nut
- 100: Ventil

## Patentansprüche

1. Vorrichtung zum Öffnen oder Schließen eines Dichtsitzes eines zur Vorrichtung gehörenden Ventils (100), das zur Anordnung in einer Rohrleitung für flüssige oder gasförmige Medien vorgesehen ist, wobei zur einmaligen Ansteuerung des Ventils (100) ein Formgedächtnisaktor (6) vorgesehen ist, der beim Erreichen einer von dessen Legierungszusammensetzung abhängigen Umwandlungstemperatur seine äußere Form ändert, und wobei die Umwandlungstemperatur durch eine steuerbare elektrische Heizvorrichtung (8) der Vorrichtung erzeugbar ist
**dadurch gekennzeichnet, dass**
der Formgedächtnisaktor (6) derart ausgebildet ist, dass er seine äußere Form sprunghaft und irreversibel ändert, und
der Dichtsitz durch eine metallische Dichtung (11) aus einem duktilen Material gebildet ist, welche im Dichtfall gegen ein Gegenstück gepresst wird und dabei plastisch verformbar ist.

2. Vorrichtung nach Anspruch 1, bei der das Ventil (100) einen in einem Verteilerraum (2) angeordneten Kolben (12) umfasst, der abhängig davon, ob das Ventil (100) ohne Ansteuerung des Formgedächtnisaktors (6) geöffnet (NO) oder geschlossen ist (NC), durch eine Feder (1) gegen einen Dichtsitz gepresst ist oder nicht, wobei der Formgedächtnisaktor (6) eine zu der Feder (1) entgegen gerichtete Kraft auf den Kolben (12) erzeugt.

3. Vorrichtung nach Anspruch 2, bei der der Kolben durch die Ansteuerung des Formgedächtnisaktors (6) abhängig davon, ob das Ventil (100) ohne Ansteuerung des Formgedächtnisaktors (6) geöffnet oder geschlossen ist, von dem Dichtsitz gelöst wird oder an den Dichtsitz gepresst wird.

4. Vorrichtung nach Anspruch 2 oder 3, bei der die Kraft des Formgedächtnisaktors (6) im nicht angesteuerten Zustand der von der Feder (1) erzeugten Kraft entspricht.

5. Vorrichtung nach einem der vorhergehenden Ansprüche, bei der die Bewegung des Kolbens (12) nur vom Kräftegleichgewicht der Feder (1) und des Formgedächtnisaktors (6) abhängig ist.

6. Vorrichtung nach einem der vorhergehenden Ansprüche, bei der der Formgedächtnisaktor (6) eine Spiralform aufweist und die Heizvorrichtung (8) im Inneren des spiralförmigen Formgedächtnisaktors (6) angeordnet ist.

7. Vorrichtung nach einem der vorhergehenden Ansprüche, bei der der Verteilerraum (2) mit zumindest zwei Anschlüssen (3, 4, 5) gekoppelt ist, so dass durch einen Anschluss (3; 5) das flüssige oder gasförmige Medium in den Verteilerraum (2) und durch einen anderen Anschluss (4; 3) das flüssige oder gasförmige Medium aus dem Verteilerraum strömen kann, wenn das Ventil (100) geöffnet ist.

8. Vorrichtung nach einem der vorhergehenden Ansprüche, bei der die Heizvorrichtung (8) eine Sicherung (7) umfasst, welche die Heizvorrichtung (8) nach dem Überschreiten der Umwandlungstemperatur des Formgedächtnisaktors (6) deaktiviert.

9. Vorrichtung nach einem der vorhergehenden Ansprüche, bei der das Ventil (100) rotationssymmetrisch bezüglich der für die Dichtfunktion erforderlichen Komponenten aufgebaut ist.

10. Vorrichtung nach einem der vorhergehenden Ansprüche, bei der das Ventil (100) drei Anschlüsse und zwei Dichtsitze umfasst, wobei einer der Anschlüsse durch eine Blindkappe verschlossen ist.

11. Antriebssystem für eine Raumfahrtanwendung, umfassend zumindest eine Vorrichtung gemäß einem der vorhergehenden Ansprüche.

## Claims

1. A device for opening or closing a seal seat of a valve (100) forming a part of the device, which is adapted to be arranged in a pipe carrying liquid or
gaseous media, wherein a shape memory actuator (6) configured to change its external shape when a transformation temperature dependent upon its alloy composition is reached is provided for a single activation of the valve (100), and wherein the transformation temperature is generatable by means of a controllable electrical heating device,
**characterized in that**
shape memory actuator (6) is configured to abruptly and irreversibly change its external shape, and
the seal seat is formed from a metal seal (11) made of a ductile material that is pressed against a counterpart in a sealed state and that thereupon is plastically deformable.

2. The device of claim 1, wherein the valve (100) comprises a piston (12) disposed in a distribution compartment, the piston (12), depending upon whether the valve (100) is opened or closed without activation of the shape memory actuator (6), is or is not pressed by a spring (1) against a seal seat, and wherein the shape memory actuator (6) generates a force directed counter to the spring (1) on the piston (12).

3. The device of claim 2, wherein the piston is released from the seal seat or is pressed onto the seal seat by the activation of the shape memory actuator (6) depending upon whether the valve (100) is opened or closed without activation of the shape memory actuator (6).

4. The device of claim 2 or 3, wherein the force of the shape memory actuator (6) corresponds in a non-activated state to the force generated by the spring (1).

5. The device of any one of the preceding claims, wherein the movement of the piston (12) is only dependent upon a balance of forces of the spring (1) and the shape memory actuator (6).

6. The device of any one of the preceding claims, wherein the shape memory actuator (6) has a spiral shape and the heating device (8) is disposed in an interior of the spiral shape memory actuator (6).

7. The device of any one of the preceding claims, wherein the distribution compartment (2) is couplable to at least two connections (3, 4, 5) so that the liquid or gaseous medium can flow through one connection (3; 5) into the distribution compartment (2) and the liquid or gaseous medium can flow through another connection (4; 3) out of the distribution compartment (2) when the valve (100) is opened.

8. The device of any one of the preceding claims, wherein the heating device (8) comprises a safety device (7) configured to deactivate the heating device (8) after the transformation temperature of the shape memory actuator (6) is exceeded.

9. The device of any one of the preceding claims, wherein the valve (100) is rotationally symmetrical with respect to components necessary for sealing.

10. The device of any one of the preceding claims, wherein the valve (100) comprises three connections and two seal seats, wherein one of the three connections is closed by a dummy cap.

11. A drive system for a space vehicle, comprising at least one device according to any one of the preceding claims.

## Revendications

1. Dispositif d'ouverture ou de fermeture d'un siège d'étanchéité d'une soupape (100), appartenant au dispositif, qui est prévu pour être disposée dans un conduit tubulaire destiné à des milieux liquides ou gazeux, un actionneur à mémoire de forme (6) étant prévu actionner une seule fois la soupape (100), lequel change de forme extérieure lorsqu'une température de transition dépendant de sa composition d'alliage est atteinte, et la température de transition pouvant être générée par un dispositif chauffant électrique commandable (8) du dispositif,
**caractérisé en ce que**
l'actionneur à mémoire de forme (6) est conçue de façon à changer de forme extérieure de manière brusque et irréversible, et
le siège d'étanchéité est formé par un joint d'étanchéité métallique (11) en matière ductile qui est pressé contre une pièce homologue pour réaliser l'étanchéité et peut ainsi être déformé plastiquement.

2. Dispositif selon la revendication 1, dans lequel la soupape (100) comporte un piston (12), disposé dans une chambre de distribution (2), qui est pressé contre un siège d'étanchéité par un ressort (1) selon que la soupape (100) est ouverte (NO) ou fermée (NC) sans commande l'actionneur à mémoire de forme (6), l'actionneur à mémoire de forme (6) générant sur le piston (12)une force opposée au ressort (1).

3. Dispositif selon la revendication 2, dans lequel le piston est libéré du siège d'étanchéité ou pressé contre le siège d'étanchéité par la commande de l'actionneur à mémoire de forme (6) selon que la vanne (100) est ouverte ou fermée sans commande de l'actionneur à mémoire de forme (6).

4. Dispositif selon la revendication 2 ou 3, dans lequel la force de l'actionneur à mémoire de forme (6) correspond, à l'état non commandé, à la force générée par le ressort (1).

5. Dispositif selon l'une des revendications précédentes, dans lequel le mouvement du piston (12) dépend uniquement de l'équilibre des forces du ressort (1) et de l'actionneur à mémoire de forme (6).

6. Dispositif selon l'une quelconque des revendications précédentes, dans lequel l'actionneur à mémoire de forme (6) a une forme en spirale et le dispositif chauffant (8) est disposé à l'intérieur de l'actionneur à mémoire de forme en spirale (6).

7. Dispositif selon l'une des revendications précédentes, dans lequel la chambre de distribution (2) est accouplée à moins deux raccords (3, 4, 5) de telle sorte que le milieu liquide ou gazeux peut s'écouler dans la chambre de distribution (2) par un raccord (3 ; 5) et le milieu liquide ou gazeux peur s'écouler hors de la chambre de distribution par un autre raccord (4 ; 3), lorsque la soupape (100) est ouverte.

8. Dispositif selon l'une des revendications précédentes, dans lequel le dispositif chauffant (8) comprend une sécurité (7) qui désactive le dispositif chauffant (8) après dépassement de la température de transition de l'actionneur à mémoire de forme (6).

9. Dispositif selon l'une des revendications précédentes, dans lequel la soupape (100) a une structure à symétrie de révolution par rapport aux composants nécessaires à la fonction d'étanchéité.

10. Dispositif selon l'une des revendications précédentes, dans lequel la soupape (100) comprend trois raccords et deux sièges d'étanchéité, l'un des raccords étant fermé par un bouchon d'obturation.

11. Système d'entraînement destiné à l'astronautique, comprenant au moins un dispositif selon l'une des revendications précédentes.
